Europäisches Patentamt

(19) European Patent Office

Office européen des brevets

(11) Publication number: **0 100 567**
**B1**

(12) # EUROPEAN PATENT SPECIFICATION

(45) Date of publication of patent specification: **09.12.87**

(51) Int. Cl.⁴: **B 65 D 21/02**

(21) Application number: **83200971.6**

(22) Date of filing: **29.06.83**

(54) A plastic container or crate, an injection mould and method for manufacturing said plastic container or crate.

(30) Priority: **02.07.82 NL 8202669**

(43) Date of publication of application:
**15.02.84 Bulletin 84/07**

(45) Publication of the grant of the patent:
**09.12.87 Bulletin 87/50**

(84) Designated Contracting States:
**AT BE CH DE FR GB IT LI LU NL SE**

(56) References cited:
**EP-A-0 028 869**
**FR-A-2 135 329**
**FR-A-2 235 058**
**FR-A-2 409 212**
**US-A-2 843 291**

(73) Proprietor: **WAVIN B.V.**
**Händellaan 251**
**NL-8031 EM Zwolle (NL)**

(72) Inventor: **Benraad, Coenraad Johannes B. M.**
**19 Rheezerend**
**NL-7701 BC Dedemsvaart (NL)**
Inventor: **Ettema, Ernst**
**9 Elzenlaan**
**NL-7771 DJ Hardenberg (NL)**

(74) Representative: **van der Veken, Johannes Adriaan et al**
**EXTERPATENT B.V. Willem Witsenplein 4**
**NL-2596 BK 's-Gravenhage (NL)**

Courier Press, Leamington Spa, England.

# Description

The invention relates to an injection-mould for manufacturing a plastic container or crate, comprising a mould core and a mould base plate for forming the bottom of the container or crate, and exchangeable side slides co-operating with said core for forming the side walls and outwardly directed upper edges of the container or crate.

An injection mould of this type for manufacturing plastic containers, also called crates in case their walls are provided with openings, is known from EP—A—0 028 869 and from NL—A—7908265.

By means of this injection mould a series of similar containers which can be stacked upon one another and are embodied in an almost identical manner but having different heights may be injection moulded using one and the same mould core, as only the "side slides" of the mould have to be exchanged in case another height is desired. Low and high plastic containers are used for different purposes, containers having a height thereinbetween being used for yet another purpose.

This known injection mould presents the disadvantage that at the inner sides of containers or crates formed with this mould and being lower than the highest ones present a "sharp" edge formed at the inner corner of the upper edge of each container or crate. The latter is caused by the fact that during injection moulding the side slides are being pressed against the core of the mould, so forming the upper boundary of the container; exactly at the inner edge of the container the mould division will be visible and undesired sharp edges will be effected at the acute square transition between the inner walls and the upper edge after the plastic material has been injected into the mould. Said transition may have burrs which cause troubles in handling and stacking such crates or containers.

The present invention aims to provide an injection mould for moulding a series of mutually stackable plastic containers or crates having various different heights, without the aforementioned disadvantages resulting from sharp edges in containers or crates having a height lower than the highest ones.

This object is attained in accordance with the invention by an injection mould of the type as described above, which is characterized in that the mould core has a plurality of core steps extending in circumferential direction of the core and — as seen in the direction from the base plate side of the core towards the core steps — directed outwardly and located at distance from each other; the transition between that surface portion of the side slides which defines the top surface of the outwardly directed upper edges and the adjoining mould division between the inner side of the side slides and the outer side of the core substantially coincides with the transition between one of the core steps and the adjoining mould division and — as seen in a direction from the base plate side of the core towards the core steps — the core surface portions in the region above the lowest core step and between two neighbouring core steps converge.

Using a mould according to the invention a series of containers or crates having a lower height than the highest container or crate will not present an undesired mould imprint line on the inner corners of the upper edges so that there the containers or crates will be free of sharp edges and burrs. The containers or crates can be handled without any problems while on the other hand the containers or crates will always remain stackable independent of their height, because all the containers or crates possess an upper edge with a circumference which is adapted to the circumference of the bottom, so that irregularities in a stack of crates and containers having different heights do not occur.

A plastic container or crate obtained by means of this mould according to the invention is so embodied that the wall portions above the lowest step — as seen in a direction from the bottom towards the upper edge — converge and possess an "anti-release" position. The present invention is therefore also based upon the insight that a container or crate having an "anti-release" portion may also be disengaged from the respective mould core without any damage occurring.

Independent of a desired height of a container or crate to be manufactured, always one and the same mould core is used, whilst dependent on the height of the container or crate to be manufactured, side slides adapted to said height are used in combination with the said mould core. Depending upon the desired height a certain and selected set of side slides is utilized.

The invention also relates to a method of manufacturing a plastic container or crate by injecting a plastic mass into a mould comprising a mould core and a mould base plate for forming the bottom of the container or crate and exchangeable side slides co-operating with said core for forming the side walls and outwardly directed upper edges of the container or crate, and independent of a desired height of a container or crate to be manufactured, always using one and the same mould core, and dependent on the height of the container or crate to be manufactured, using side slides adapted to said height in combination with said mould core, as is known from EP—A—0 028 869, which method is characterized in that an injection mould according to the invention is used.

It should be noted that FR—A—2 235 058 discloses a plastic container or crate comprising upright side walls extending between the reinforced outwardly directed upper edges and a bottom wherein at least at the inner side of the container the side walls are provided with a step extending in circumferential direction of the container at which step — as seen in the upward direction of the walls — those wall portions above this step are at an angle with respect to the bottom differing from the corresponding angle of the wall portion beneath that step, but this document is silent about the position of the mould imprint line which is essential in order to avoid formation of sharp edges with burrs at the inner corner of the upper edge of the container or crate.

Therefore the invention also relates to a plastic container or crate comprising upright side walls extending between reinforced outwardly directed upper edges and a bottom wherein at least at the inner side of the container or crate, the side walls are provided with at least one container or crate step extending in circumferential direction of the container or crate and — as seen in the upward direction of the walls — directed outwardly, the wall portions above this step are at an angle with respect to the bottom differing from the corresponding angle of the wall portion beneath that step, characterised in that the wall portions above the lowest step — as seen in the upward direction of the walls — converge and the mould division imprint line of the mould for forming said container or crate is located in the top side of the upper edge outwardly from the inner surface of the container or crate adjoining said upper edge.

The invention is illustrated with the aid of the accompanying drawing, wherein:

Fig. 1 is a vertical section of a side wall of a container or crate with a great height;

Fig. 2 is a section of part of a mould comprising a vertical section of a side wall of a container or crate having a height lesser than that of Fig. 1; and

Fig. 3 is a section corresponding to Fig. 2 but illustrating the lowest container or crate of a series.

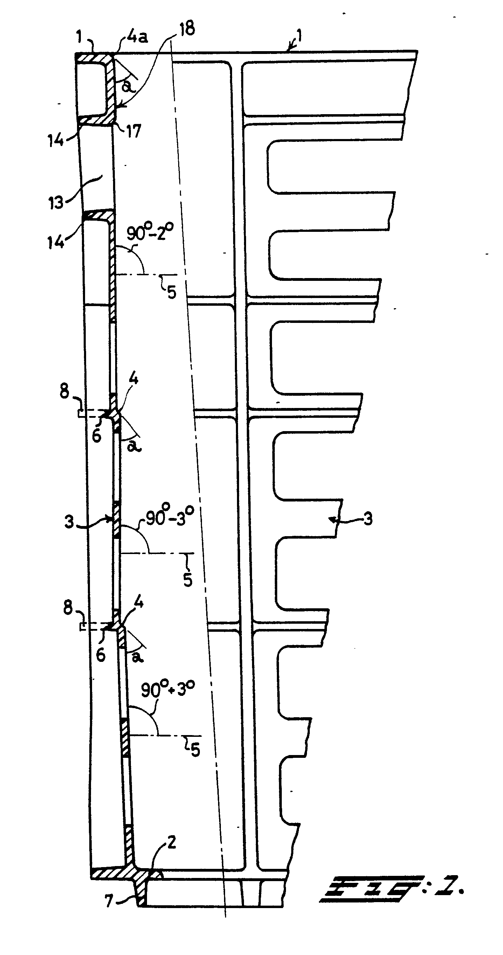

Fig. 1 is a vertical section of a side wall of a plastic container or crate comprising a grip. Part of the adjoining side wall is visible in a lateral view. The plastic container or crate comprises upright side walls 3 extending between a reinforced outwardly directed upper edge 1 and a bottom 2. The walls are at least at the inner side of the container or crate provided with a step extending in circumferential direction of the container. Two steps referenced 4 are shown in section in Fig. 1. A similar step 4a is provided near the upper edge of the container or crate, and is mostly in the form of a rounding to avoid a sharp edge at the inner side of the upper edge of the container or crate. The use of such a step or rounding 4a is known per se. As is further apparent from the section of Fig. 1, the wall portions above the steps 4 are — as seen in the upright direction of the walls — disposed with respect to bottom 2, under an angle differing from the angle of the wall portions beneath those steps and bottom of the container, for a purpose to be described hereafter.

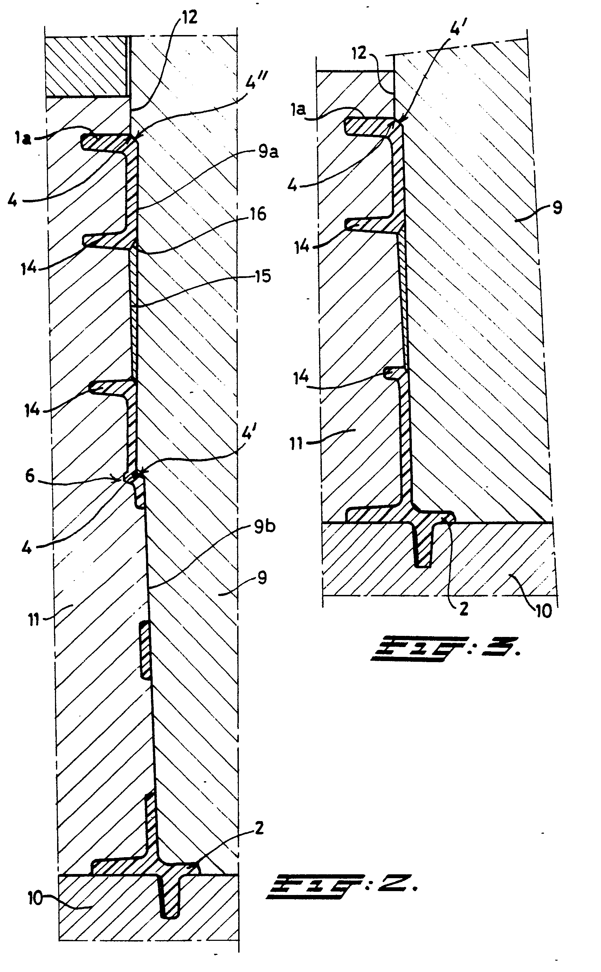

The dot-dash lines 5 in Fig. 1 illustrate supplementary planes. Said planes extend parallel to the plane of bottom 2. The wall portion between bottom 2 and the lowest step 4 is shaped in a "releasing" manner, that is to say that this portion can be drawn from a mould core without any problems, due to the inclination of the wall. In practice the angle of this wall portion with respect to the plane of bottom 2 or the plane as depicted by lines 5, is approximately 90° + 3°. The wall portion between the upper edge and the step located therebeneath is disposed at a different angle, for example 90° − 2°. The same feature applies to the wall portion between the two steps. Wall portions above the lowest step in the container wall consequently extend in the upright direction counterwise to wall portions beneath the lowest step 4. It will be obvious from the angles as described, that the opposite walls of the container with their portions situated above the lower step 4 converge with respect to one another in a direction towards the upper edge 1 of said container. The wall portions between the lowest step 4 and the bottom 2 of the container extend in a "releasing" manner, whilst the wall portions above the lowest step extend in an "anti-releasing" manner. As is clearly visible in Fig. 1, the step at the inner side of the container extends in a manner curved or inclined with respect to the plane of the wall, as is depicted by angle $a$. Preferably the steps 4 in the walls 3 at the inner side of the container also extend at the outer side of the container and merge into ribs 6 projecting from the wall. A container or crate comprising side walls, as illustrated in Fig. 1, is particularly suitable to be manufactured in a lower embodiment also, by one and the same mould. The measures as described hereinbefore, are taken so as to be able to stack not only containers or crates having the same height but also containers or crates having different heights. When low-walled containers or crates are manufactured comprising side walls with steps, and all wall portions extending in a "releasing" manner — the respective container or crate, for example having a height extending from the bottom to the lowest step — it will be obvious that no problems will occur when stacking said containers or crates. In the event, however, that containers or crates having walls of the height shown in Fig. 1 are being manufactured, the use of the steps 4 could cause the top opening of the same to be too wide to suitably adjoin the bottom and the edge 7 of another container or crate to be stacked. An incorrect fitting into one another might even cause superimposed containers to get lowered into the subjacent ones, as independent of the height of the manufactured product, the dimensions of the bottom 2 always remain constant. This is the reason why certain wall portions are embodied in an "anti-releasing" manner, thus allowing the dimensions of opening of the container at the upper edge 1, to be always the same as the dimensions of said opening of a lower container, the upper edge of which is e.g. positioned at the lower step 4. In the figures the upper edges of lower containers or crates are depicted by dotted lines 8. Lower containers no longer have a sharp edge because of the use of steps 4, the more so because the same circumstances are attained as at step 4a at upper edge 1 of the container, which will be illustrated with reference to Fig. 2.

Fig. 2 illustrates the same wall section analogous to Fig. 1, immediately after having injection-moulded plastic material into a mould. The steps 4 are provided in the mould core 9 as steps 4', 4'', .... Said mould core 9 has such a height, that also a container according to Fig. 1 can be produced with it. Fig. 2 only illustrates a vertical section of part of the lower portion of the mould core 9. Mould core 9 cooperates with a base plate 10, as well as with a side slide 11, the height of which is adapted to manufacture a container with the upper edge 1a situated at the upper step 4. An injection-mould is used having a core 9 for forming the inner side of the container, a base plate 10 for forming in conjunction with the core 9 the bottom of the container, and side slides cooperating with said core for forming the side walls of the container and being laterally removable from the core after the injection-moulding operation so as to release the side walls, so that the manufactured container can be drawn from the core after having drawn core 9 and base plate 10 from one another. In the embodiment of the injection mould according to the invention the mould core 9 is provided with a plurality of steps 4 extending in circumferential direction of the core and located at distance from one another, the mould division, referenced 12, between the core 9 and the top part of the side slides 11 being always positioned above the respective step, for which purpose the slides 11 are adapted. One and the same mould core 9 provided with steps can therefore cooperate with a plurality of sets of side slides 11 each having a different height, the height of each set of side slides being adapted to the position of a respective step 4 with the mould division 12 being positioned above said step. Fig. 3 only illustrates the lower part of the mould core 9 and a side slide 11, the mould division 12 being positioned just above the lowest step 4. In this case the mould core is adapted to manufacture a very low container or crate the upper edge 1 of which is positioned relatively close to the bottom 2.

It is possible to build up the side slides in the upright direction from a number of sections, a certain combination of this sections determining near which core step the mould division 12 is located. In case the upper edge 1a is situated at one of the steps 4, obviously the same situation is attained as at step 4a in Fig. 1, eliminating the occurrence of a sharp edge at the upper edge of the container or crate.

The mould core 9 as shown in Fig. 2 is provided in circumferential direction with a plurality of core steps 4', 4'', .... From the core step 4' extend upwardly and downwardly core surface portions 9a and 9b respectively. The core surface portion 9b in the region between the base plate side of the core and the lowest core step divides upwardly from the base plate side of the core while the core surface portion 9a between the core steps 4' and 4'' converges in said direction. The core step 4'' extends in a chamfered manner into the upper core surface portion 9a and the core step 4' extends also in a chamfered manner into the lower core surface portion 9b.

In case the wall is provided with an opening 13 for a grip bounded by a flange 14 (Fig. 1), a filler 15 can be screwed onto the mould core at said opening 13. Said filler 15 has a chamfered top side 16 to obtain an inclined edge 17, so also eliminating the presence of a sharp edge caused by the mould division.

A method for manufacturing a plastic container or crate of the type as described hereinbefore, while using the mould as described, therefore consists in that independent of a given height of a container or crate to be manufactured, always one and the same mould core is used, whilst dependent on the height of the container or crate to be manufactured, side slides, adapted to said height are used with the said mould core.

It is observed that the reference numerals in the claims are not intended to restrict the scope thereof, but are only denoted for clarification.

**Claims**

1. An injection-mould for manufacturing a plastic container or crate, comprising a mould core (9) and a mould base plate (10) for forming the bottom (2) of the container or crate, and exchangeable side slides (11) co-operating with said core for forming the side walls (3) and outwardly directed upper edges (1) of the container or crate, characterized in that the mould core (9) has a plurality of core steps (4', 4'', ...) extending in circumferential direction of the core and — as seen in the direction from the base plate side of the core towards the core steps — directed outwardly and located at distance from each other; the transition between that surface portion of the side slides which defines the top surface of the outwardly directed upper edges (1, 1a) and the adjoining mould division (12) between the inner side of the side slides and the outer side of the core (9) substantially coincides with the transition between one of the core steps (4', 4'', ...) and the adjoining/division (12), and — as seen in a direction from the base plate side of the core towards the core steps — the core surface portions (9a) in the region above the lowest core step (4') and between two neighbouring core steps converge.

2. An injection-mould as claimed in claim 1, characterized in that one and the same mould core (9) provided with steps (4', 4'', ...) for manufacturing a series of containers or crates with different heights, is provided with a plurality of different sets of side slides (11)oferent sets of side slides (11) having different heights, the height of each set of side slides being adapted to the position of one of the steps (4', 4'', ...) on the mould core (9).

3. An injection-mould as claimed in claims 1 or 2, characterized in that the side slides (11) are, in the upright direction, built up from a number of sections, a certain combination of these sections determining near which core step (4', 4'', ...) the mould division (12) is located.

4. An injection-mould as claimed in claims 1—3, characterized in that the core steps (4', 4'', . . .) are chamfered or curved.

5. A method of manufacturing a plastic container or crate by injecting a plastic mass into a mould comprising a mould core (9) and a mould base plate (10) for forming the bottom (2) of the container or crate and exchangeable side slides (11) cooperating with said core for forming the side walls (3) and outwardly directed upper edges (1) of the container or crate, and independent of a desired height of a container or crate to be manufactured, always using one and the same mould core, and dependent on the height of the container or crate to be manufactured, using side slides (11) adapted to said height in combination with said mould core, characterized in that an injection mould as defined in any one of claims 1 to 4 is used.

6. A plastic container or crate, comprising upright side walls (3) extending between reinforced outwardly directed upper edges (1) and a bottom (2), wherein at least at the inner side of the container or crate, the side walls (3) are provided with at least one container or crate step (4) extending in circumferential direction of the container or crate and — as seen in the upward direction of the walls — directed outwardly, the wall portions above this step are at an angle with respect to the bottom differing from the corresponding angle of the wall portion beneath that step, characterized in that the wall portions above the lowest step (4) — as seen in the upward direction of the walls — converge and the mould division imprint line of the mould for forming said container or crate is located in the top side of the upper edge (1, 1a) outwardly from the inner surface (18) of the container or crate adjoining said upper edge (11).

7. A plastic container or crate as claimed in claim 6, characterized in that the steps (4) are chamfered or curved.

**Patentansprüche**

1. Spritzgießform zum Herstellen eines Kunststoffbehälters, bestehend aus einem Formkern (9) und einer Formbasisplatte (10) zum Formen des Bodens (2) des Behälters sowie aus austauschbaren Schiebeseiten (11), die mit dem Kern zur Formung der Seitenwände (3) und nach außen gerichteter oberer Ränder (1) des Behälters zusammenwirken, dadurch gekennzeichnet, daß der Formkern (9) eine Mehrzahl von Kernstufen (4, 4'', . . .) aufweist, die sich in Umfangsrichtung des Kerns erstrecken und — in Richtung von der Basisplattenseite des Kerns zu den Kernstufen gesehen — nach außen gerichtet und mit Abstand voneinander angeordnet sind, der Übergang zwischen demjenigen Oberflächenbereich der Schiebeseiten, der die obere Fläche der nach außen gerichteten oberen Ränder (1, 1a) definiert, und der angrenzenden Formteilung (12) zwischen der Innenseite der Schiebeseiten und der Außenseite des Kerns (9) im wesentlichen mit dem Übergang zwischen einer der Kernstufen (4, 4'', . . .) und der angrenzenden Formteilung (12) zusammenfällt, und — in Richtung von der Basisplattenseite des Kerns zu den Kernstufen hin gesehen — die Kernoberflächenbereiche (9a) im Bereich über der untersten Kernstufe (4') und zwischen zwei benachbarten Kernstufen konvergieren.

2. Spritzgießform nach Anspruch 1, dadurch gekennzeichnet, daß ein und derselbe mit Stufen (4', 4'', . . .) versehene Formkern (9) zum Herstellen einer Reihe von Behältern mit unterschiedlichen Höhen mit einer Mehrzahl verschiedener Sätze von Schiebeseiten (11) mit verschiedenen Höhen versehen ist, wobei die Höhe jedes Satzes von Schiebeseiten an die Lage einer der Stufen (4', 4'', . . .) am Formkern (9) angepaßt ist.

3. Spritzgießform nach Anspruch 1 oder 2, dadurch gekennzeichnet, daß die Schiebeseiten (11) in Aufwärtsrichtung von einer Anzahl von Abschnitten gebildet sind, wobei eine bestimmte Kombination dieser Abschnitte bestimmt, nahe welcher Kernstufe (4', 4'', . . .) die Formteilung (12) angeordnet ist.

4. Spritzgießform nach den Ansprüche 1 bis 3, dadurch gekennzeichnet, daß die Kernstufen (4', 4'', . . .) abgeschrägt oder gekrümmt sind.

5. Verfahren zum Herstellen eines Kunststoffbehälters durch Einspritzen einer Kunststoffmasse in eine Form, bestehend aus einem Formkern (9) und einer Formbasisplatte (10) zur Formung des Bodens (2) des Behälters und aus austauschbaren Schiebeseiten (11), die mit dem Kern zum Formen der Seitenwände (3) und nach außen gerichteter oberer Ränder (1) des Behälters zusammenwirken, wobei unabhängig von einer gewünschten Höhe des herzustellenden Behälters stets ein und derselbe Formkern verwendet wird und in Abhängigkeit von der Höhe des herzustellenden Behälters Schiebeseiten (11) verwendet werden, die der Behälterhöhe in Verbindung mit dem Formkern angepaßt sind, dadurch gekennzeichnet, daß eine Spritzgießform nach einem der Ansprüche 1 bis 4 verwendet wird.

6. Kunststoffbehälter, bestehend aus aufrechten Seitenwänden (3), die sich zwischen verstärkten nach außen gerichteten oberen Rändern (1) und einem Boden (2) erstrecken, wobei zumindest an der Innenseite des Behälters die Seitenwände (3) mit zumindest einer Behälterstufe (4) versehen sind, die in Umfangsrichtung des Behälters verläuft und — in Aufwärtsrichtung der Wände gesehen — nach außen gerichtet ist, und die Wandbereiche über dieser Stufe in einem Winkel zum Boden angeordnet sind, der von dem entsprechenden Winkel des Wandbereichs unter jener Stufe abweicht, dadurch gekennzeichnet, daß die Wandbereiche über der untersten Stufe (4) — in Aufwärtsrichtung der Wände gesehen — konvergieren und die Formteilungsabdrucklinie der Form zum Formen des Behälters in der oberen Seite des oberen Randes (1, 1a) von der an den oberen Rand abgrenzenden Innenfläche (18) des Behälters nach außen angeordnet ist.

7. Kunststoffbehälter nach Anspruch 6, dadurch gekennzeichnet, daß die Stufen (4) schräg oder gekrümmt sind.

## Revendications

1. Moule à injection pour la fabrication d'un récipient en matière plastique ou caisse à claire-voie en matière plastique, comprenant un noyau de moule (9) et une plaque de base de moule (10), destinés à réaliser le fond (2) du récipient ou de la caisse à claire-voie, et des coulisses latérales interchangeables (11) coopérant avec ledit noyau pour réaliser les parois latérales (3) et les bords supérieurs dirigés vers l'extérieur (1) du récipient ou de la caisse à claire-voie, caractérisé en ce que le noyau de moule (9) comprend plusieurs gradins de noyau (4', 4'', . . .) s'étendant dans le sens périphérique du noyau et — en considérant la direction allant du côté de la plaque de base du noyau vers les gradins de noyau — dirigés vers l'extérieur et situés à une certaine distance les uns des autres; la transition entre la portion de surface des coulisses latérales, qui définit la surface supérieure des bords supérieurs dirigés vers l'extérieur (1, 1a), et la plan de joint adjacent (12) du moule entre la face intérieure des coulisses latérales et la face extérieure du noyau (9), coïncide sensiblement avec la transition entre l'un des gradins de noyau (4', 4'', . . .) et le plan de joint de moule adjacent (12) et — en considérant une direction allant du côté de la plaque de base du noyau vers les gradins de noyau — les portions de surface de noyau (9a), dans la région située au-dessus du gradin de noyau le plus bas (4') et entre deux gradins de noyau voisins, convergent.

2. Moule à injection selon la revendication 1, caractérisé en ce que l'on prévoit un seul et même noyau de moule (9) muni de gradins (4', 4'', . . .) pour la fabrication d'une série de récipients ou de caisses à claire-voie de hauteurs différentes, avec plusieurs jeux différents de coulisses latérales (11) de hauteurs différentes, la hauteur de chaque jeu de coulisses latérales étant adaptée à la position d'un gradin respectif (4', 4'', . . .) sur le noyau de moule (9).

3. Moule à injection selon les revendications 1 ou 2, caractérisé en ce que les coulisses latérales (11) sont, dans le sens vertical, réalisées à partir de nombreuses sections, une certaine combinaison de ces sections déterminant à proximité de quel gradin de noyau (4', 4'', . . .) est situé le plan de joint (12) du moule.

4. Moule à injection selon les revendications 1 à 3, caractérisé en ce que les gradins de noyau (4', 4'', . . .) sont chanfreinés ou incurvés.

5. Procédé pour fabriquer un récipient ou caisse à claire-voie en matière plastique, par injection d'une masse de matière plastique dans un moule comprenant un noyau de moule (9) et une plaque de base de moule (10) pour réaliser le fond (2) du récipient ou de la caisse à claire-voie, et des coulisses latérales interchangeables (11) coopérant avec ledit noyau pour réaliser les parois latérales (3) et les bords supérieurs dirigés vers l'extérieur (1) du récipient ou de la caisse à claire-voie, procédé selon lequel, quelle que soit la hauteur souhaitée pour le récipient ou la caisse à claire-voie à fabriquer, on utilise toujours un seul et même noyau de moule, et, en fonction de la hauteur du récipient ou de la caisse à claire-voie à fabriquer, on utilise des coulisses latérales (11) adaptées à ladite hauteur, en combinaison avec ledit noyau de moule, caractérisé en ce que l'on utilise un moule à injection tel que défini dans l'une quelconque des revendications 1 à 4.

6. Récipient ou caisse à claire-voie en matière plastique, comprenant des parois latérales verticales (3) s'étendant entre des bords supérieurs renforcés dirigés vers l'extérieur (1) et un fond (2), dans lequel, au moins sur la face intérieure du récipient ou de la caisse à claire-voie, les parois latérales (3) présentent au moins un gradin (4) de récipient ou de caisse à claire-voie s'étendant dans le sens périphérique du récipient ou de la caisse à claire-voie et — en considérant la direction montante des parois — dirigé vers l'extérieur et les portions de paroi situées au-dessus de ce gradin font un angle, par rapport au fond, qui diffère de l'angle correspondant de la portion de paroi située au-dessous de ce gradin, caractérisé en ce que les portions de paroi situées au-dessus du gradin le plus bas (4) — en considérant la direction montante des parois — convergent et la ligne d'empreinte du plan de joint du moule, destiné à réaliser le récipient ou la caisse à claire-voie, est située sur le côté supérieur du bord supérieur (1, 1a) et est dirigée vers l'extérieur par rapport à la surface intérieure (18) du récipient ou de la caisse à claire-voie adjacente audit bord supérieur (11).

7. Récipient ou caisse à claire-voie en matière plastique selon la revendication 6, caractérisé en ce que les gradins (4) sont chanfreinés ou incurvés.

*FIG: 2.*

FIG. 2.

FIG. 3.